# EUROPEAN PATENT APPLICATION

(11) **EP 4 455 591 A1**
(43) Date of publication of application: **30.10.2024**
(21) Application number: 22910812.1
(22) Date of filing: 01.12.2022
(51) Int. Cl.: F27D 3/12, B28B 11/24

(54) **RING TRAY FOR HONEYCOMB SUBSTRATE FIRING**

(30) Priority: 23.12.2021 JP 2021209869
(71) Applicant: CATALER CORPORATION, Kakegawa-shi, Shizuoka 437-1492 (JP)
(72) Inventor: SAKURAI, Daiki, Kakegawa-shi, Shizuoka 437-1492 (JP); OKABE, Katsuhiro, Kakegawa-shi, Shizuoka 437-1492 (JP); SUZUKI, Shintaro, Kakegawa-shi, Shizuoka 437-1492 (JP)
(74) Representative: Ricker, Mathias
(86) International application number: PCT/JP2022/044411
(87) International publication number: WO 2023/120095

(57) **Abstract**

Provided is a ring tray for honeycomb substrate firing, the ring tray being for supporting a honeycomb substrate having a plurality of cell flow channels partitioned by cell walls, so that the flow channel direction of the cell flow channels is vertical during firing of the substrate, said ring tray including a ring-shaped frame part, a support part further inside than the frame part, and a connecting part for connecting the frame part and the support part, and said ring tray for honeycomb substrate firing being configured so that when the honeycomb substrate is mounted on the ring tray, the support part does not contact an outer peripheral edge of a lower end surface of the honeycomb substrate, and contacts a portion of an internal region of the lower end surface of the honeycomb substrate, and is thus able to support the lower end of the honeycomb substrate, and the frame part and the connecting part do not contact the lower end surface of the honeycomb substrate.

## Description

### FIELD

The present invention relates to a ring tray for honeycomb substrate firing.

### BACKGROUND

Exhaust gas emitted from an internal combustion engine such as an automobile engine is released into the air after having been purified by an exhaust gas purification catalyst device installed in an exhaust system. The exhaust gas purification catalyst device typically includes, for example, a honeycomb substrate having multiple cell flow channels sectioned by partition walls, and a catalyst coating layer formed on and/or inside the partition walls of the honeycomb substrate.

This type of exhaust gas purification catalyst device is produced by coating a coating solution comprising the starting component for the catalyst coating layer onto the honeycomb substrate, and then firing it.

The honeycomb substrate on which the coating solution has been coated is conveyed while set on a honeycomb substrate-firing tray, for example, being thus carried into a firing furnace and fired.

The honeycomb substrate-firing tray is constructed with the part that supports the honeycomb substrate (the honeycomb substrate supporting part) being welded in the hole of a support plate that has a hole of slightly larger diameter than the diameter of the honeycomb substrate. The honeycomb substrate supporting part is constructed, for example, having a ring-shaped protrusion, or multiple claws protruding on the inner side in the radial direction from the outer perimeter of the support plate hole, contacting with the lower end face of the honeycomb substrate to support the honeycomb substrate.

### SUMMARY

### [TECHNICAL PROBLEM]

When the honeycomb substrate is set on the honeycomb substrate-firing tray and conveyed, damage such as cracking and chipping have been known to occur at the edges on the lower end face of the honeycomb substrate or at the outer covering parts near the bottom edge. Damage such as cracking and chipping can also occur at the outer covering part of the honeycomb substrate during firing as well.

Damage occurring in the honeycomb substrate can adversely affect the quality of the exhaust gas purification catalyst product.

It is therefore an object of the present invention to provide a tray for honeycomb substrate firing that produces less substrate damage during conveying and firing of a honeycomb substrate.

### [SOLUTION TO PROBLEM]

The present invention is as follows.

### <Aspect 1>

A ring tray for honeycomb substrate firing, serving to support a honeycomb substrate having a plurality of cell flow channels partitioned by cell walls, so that the direction of the cell flow channels is vertical during firing of the substrate,
wherein the ring tray includes a ring-shaped frame, a supporting part further inward than the frame, and a connecting part that connects the frame with the supporting part, and
the ring tray is configured so that when the honeycomb substrate is mounted on the ring tray,
the supporting part does not contact the outer perimeter of the lower end face of the honeycomb substrate, but contacts with part of the inner region of the lower end face of the honeycomb substrate, allowing it to support the lower end of the honeycomb substrate, and
the frame and the connecting part do not contact the lower end face of the honeycomb substrate.

### <Aspect 2>

The ring tray according to aspect 1, wherein the connecting part is located below the surface defined by the contact part between the supporting part and the lower end face of the honeycomb substrate.

### <Aspect 3>

The ring tray according to aspect 1 or 2, wherein the connecting part has holes running through the thickness direction of the ring tray.

### <Aspect 4>

The ring tray according to any one of aspects 1 to 3, wherein in a cross-section of the ring tray cut in the thickness direction, at least the connecting part has a relief part depressed toward the outer side of the ring tray in the radial direction.

### <Aspect 5>

The ring tray according to any one of aspects 1 to 4, wherein the supporting part is ring-shaped.

### <Aspect 6>

A plate with an attached ring tray for honeycomb substrate firing,
comprising a support plate with an opening and one or more ring plates fitted into the opening,
the ring tray being a ring tray according to any one of aspects 1 to 5.

### <Aspect 7>

A method for producing an exhaust gas purification catalyst device, the method comprising firing a honeycomb substrate while the lower end of the honeycomb substrate is mounted on the supporting part of a ring tray according to any one of aspects 1 to 5.

### <Aspect 8>

A method for producing an exhaust gas purification catalyst device according to aspect 7, wherein the ring tray is a plate with an attached ring tray according to aspect 6.

### [ADVANTAGEOUS EFFECTS OF INVENTION]

The present invention provides a honeycomb substrate-firing tray that produces less substrate damage such as substrate cracking or chipping during conveying and firing of a honeycomb substrate.

### BRIEF DESCRIPTION OF DRAWINGS

Fig. 1 is a diagram illustrating the construction of a ring tray for honeycomb substrate firing according to embodiment 1. Fig. 1(A) is a perspective view, Fig. 1(B) is a top view and Fig. 1(C) is a cross-sectional view of Fig. 1(A) along line A-A.
Fig. 2(A) is a magnified view of section B of Fig. 1(C), and Fig. 2(B) shows the state of a honeycomb substrate mounted on the ring tray of Fig. 2(A).
Fig. 3 is a diagram illustrating the construction of a ring tray for honeycomb substrate firing according to embodiment 2. Fig. 3(A) is a perspective view, Fig. 3(B) is a top view and Fig. 3(C) is a cross-sectional view of Fig. 3(A) along line A-A.
Fig. 4(A) is a magnified view of section B of Fig. 3(C), and Fig. 4(B) shows the state of a honeycomb substrate mounted on the ring tray of Fig. 4(A).
Fig. 5(A) and Fig. 5(B) are photographs of a lower end face of the honeycomb substrate fired using the ring tray for honeycomb substrate firing of embodiment 1, and Fig. 5(C) is a photograph of the area near the lower end face of a honeycomb substrate fired using a conventional honeycomb substrate-firing tray.

### DESCRIPTION OF EMBODIMENTS

### <Ring tray for honeycomb substrate firing>

The ring tray for honeycomb substrate firing of the invention is a ring tray for honeycomb substrate firing that serves to support a honeycomb substrate having a plurality of cell flow channels partitioned by cell walls, so that the direction of the cell flow channels is vertical during firing of the substrate,
wherein the ring tray includes a ring-shaped frame, a supporting part further inward than the frame, and a connecting part that connects the frame with the supporting part, and
the ring tray is configured so that when the honeycomb substrate is mounted on the ring tray,
the supporting part does not contact the outer perimeter of the lower end face of the honeycomb substrate, but contacts with part of the inner region of the lower end face of the honeycomb substrate, allowing it to support the lower end of the honeycomb substrate, and
the frame and the connecting part do not contact the lower end face of the honeycomb substrate.

As used herein, the terms "upper" and "lower" are used in reference to the direction of gravity, when the honeycomb substrate is fired while mounted on the ring tray for honeycomb substrate firing of the invention. In other words, the direction of gravity is the "lower" end and the opposite direction is the "upper" end, for a ring tray situated so as to have a horizontal orientation for the surface defined by the support surface of the supporting part, for firing of a honeycomb substrate.

The term "thickness direction" in regard to the ring tray for honeycomb substrate firing is the direction parallel to gravity, for a ring tray for honeycomb substrate firing situated so as to have a horizontal orientation for the surface defined by the support surface of the supporting part, for firing of a honeycomb substrate.

A honeycomb substrate to be fired using the ring tray for honeycomb substrate firing of the invention is a honeycomb substrate having a plurality of cell flow channels partitioned by cell walls. The cell walls may be made of a porous material such as cordierite, as explained below. A honeycomb substrate having porous cell walls will usually have an outer covering with a thickness of about 0.3 to 3 mm. The outer covering is harder than the cell walls inside the substrate and functions to protect the honeycomb substrate from impact. However, the outer covering part may be brittle against external stress, producing damage such as cracking or chipping.

In a honeycomb substrate-firing tray of the prior art, the honeycomb substrate supporting part contacts with the outer edge section of the lower end face of the honeycomb substrate and its surrounding region, thereby supporting the honeycomb substrate. The honeycomb substrate supporting part therefore contacts with at least part of the outer covering on the outer perimeter of the lower end face of the honeycomb substrate.

When a honeycomb substrate is mounted on this type of honeycomb substrate-firing tray and conveyed, vibration is produced. The vibration causes repetitive action whereby part of the outer covering of the lower end face of the honeycomb substrate rises off from and then recontacts the honeycomb substrate supporting part, which produces further repeated stress with a short cycle, and often creates damage such as cracking and chipping in the outer covering part.

The honeycomb substrate also swells during firing, causing the outer covering on the lower end face of the substrate to contact part of the honeycomb substrate supporting part, often causing damage such as cracking and chipping.

In contrast, the ring tray for honeycomb substrate firing of the invention is constructed so that the supporting part supports the honeycomb substrate by contacting the inner region of the lower end face of the honeycomb substrate, without contacting the outer perimeter of the lower end face of the honeycomb substrate. Thus, even if the lower end face of the honeycomb substrate recontacts after having been lifted up from the supporting part by vibration while being conveyed, no stress is exerted on the outer covering part of the honeycomb substrate, and therefore damage to that part is reduced.

Moreover, a conventional honeycomb substrate-firing tray has the support plate and honeycomb substrate supporting part joined by welding. The extent of precision machining by welded joining is limited, and therefore minute distortion is unavoidable in conventional honeycomb substrate-firing trays. This exacerbates vibration during conveying or results in an insufficient margin for swelling of the ring tray during firing, thereby accelerating damage produced in the outer covering of the honeycomb substrate.

In contrast, since the ring tray for honeycomb substrate firing of the invention can be produced without welding, such as by cutting, it is possible to achieve dimensional precision according to the design, thus helping to reduce damage to the outer covering of the honeycomb substrate caused by minute distortion.

A honeycomb substrate for use of a ring tray for honeycomb substrate firing of the invention will now be described, explaining each of the constituent parts of the ring tray in order.

### <Honeycomb substrate>

A honeycomb substrate for use of the ring tray for honeycomb substrate firing of the invention is a honeycomb substrate having a plurality of cell flow channels partitioned by cell walls.

The honeycomb substrate may be constructed from any desired material. For example, it order to exhibit the effect of the invention of reducing damage to the honeycomb substrate during conveying and firing, however, the honeycomb substrate may be made of a material that is prone to damage.

The honeycomb substrate may therefore be made of a porous material, and typically cordierite.

The honeycomb substrate may be either a straight flow type or a wall flow type. However, a wall flow type honeycomb substrate generally has a high void percentage for the porous material, with application of stress tending to cause damage such as cracking and chipping. The effect of the invention is therefore maximally exhibited when the ring tray for honeycomb substrate firing of the invention is used for a wall flow type honeycomb substrate.

The shape of a cross-section of the honeycomb substrate cut on a plane perpendicular to the direction of the cell flow channels may be circular, elliptical or polygonal (such as rectangular), for example. The cross-sectional shape of a honeycomb substrate for which the ring tray for honeycomb substrate firing of the invention is used will typically be circular or elliptical. A typical honeycomb substrate will therefore have a circular columnar or elliptical columnar shape.

The honeycomb substrate may have an outer covering on the side wall. The outer covering may have a lower void percentage and higher hardness than the cell walls inside the substrate, and may function to protect the honeycomb substrate from impact. The thickness of the outer covering may be 0.3 mm or larger, 0.5 mm or larger, 1.0 mm or larger, 1.5 mm or larger or 2.0 mm or larger, for example, and 5.0 mm or smaller, 4.5 mm or smaller, 4.0 mm or smaller, 3.5 mm or smaller, 3.0 mm or smaller, 2.5 mm or smaller or 2.0 mm or smaller, for example.

### <Frame>

The frame of the ring tray for honeycomb substrate firing of the invention is ring-shaped. Here, "ring-shaped" includes both the concept of toric and elliptical annular.

If the frame is toric, the ring tray for honeycomb substrate firing may be used for firing of honeycomb substrates with circular cross-sections. In this case the inner diameter of the frame may be slightly larger that the diameter of the honeycomb substrate cross-section, being a diameter allowing penetration of the honeycomb substrate. When the inner diameter of the frame varies through the cross-section of the frame in the thickness direction, the inner diameter is the diameter of the innermost part.

When the frame is toric, the ring tray for honeycomb substrate firing will generally be used by fitting into the opening of a circular support plate with an opening. In this case, the outer diameter of the frame may be larger than the diameter of the opening of the support plate, as a diameter allowing the ring tray to be held by the support plate. When the outer diameter of the frame varies through the cross-section of the frame in the thickness direction, the outer diameter is the diameter of the outermost part.

If the frame is elliptical annular, the ring tray for honeycomb substrate firing may be used for firing of honeycomb substrates with elliptical cross-sections. In this case the long diameter and short diameter on the inner side of the frame may be slightly larger that the long diameter and short diameter of the honeycomb substrate cross-section, respectively, being diameters allowing penetration of the honeycomb substrate. When the long diameter and short diameter on the inner side of the frame vary throughout the cross-section of the frame in the thickness direction, the long diameter and short diameter are the long diameter and short diameter of the innermost parts, respectively.

When the frame is elliptical annular, the ring tray for honeycomb substrate firing will generally be used by fitting into the opening of an elliptical support plate with an opening. In this case, the long diameter and short diameter on the outer side of the frame may be larger than the long diameter and short diameter of the opening of the support plate, respectively, as diameters allowing the ring tray to be held by the support plate. When the long diameter and short diameter on the outer side of the frame vary throughout the cross-section of the frame in the thickness direction, the long diameter and short diameter are the long diameter and short diameter of the outermost parts, respectively.

The frame may be flat cylindrical at the uppermost section, or the uppermost section may be a toroidal shape formed by curves.

The outer peripheral section of the frame may also have stepwise levels in a cross-section of the ring tray for honeycomb substrate firing cut in the thickness direction.

The outer peripheral section of the frame may have in the cross-section, a large diameter part that is slightly larger than the diameter (or the long diameter or short diameter) of the opening of the support plate and a small diameter part that is slightly smaller than the diameter (or the long diameter or short diameter) of the opening of the support plate, in that order from top to bottom. A ring tray for honeycomb substrate firing having such a construction will be easier to fit into the desired location of the support plate and will have more satisfactory handleability.

The frame in the ring tray for honeycomb substrate firing of the invention may be composed of such a large diameter part and small diameter part.

The frame of the ring tray for honeycomb substrate firing of the invention may also have an accommodating shape on the inner peripheral part. For example, the inner periphery of the frame may have in its cross-section an accommodating section with a small diameter part that is slightly larger than the diameter (or the long diameter or short diameter) of the cross-section of the honeycomb substrate, gradually increasing in diameter upward from the top end of the small diameter part. A ring tray having such a construction will facilitate fitting of the honeycomb substrate into the desired location and will have more satisfactory handleability.

The frame of the ring tray for honeycomb substrate firing of the invention may also have in its cross-section a relief part depressed toward the outer side of the ring tray in the radial direction. This relief part will be described in detail below.

### <Supporting part>

The supporting part of the ring tray for honeycomb substrate firing of the invention is disposed further toward the inner side in the radial direction than the frame.

The supporting part is constructed so as to support the lower end of the honeycomb substrate by contacting part of the inner region of the lower end face of the honeycomb substrate, and without contacting the outer perimeter of the lower end face of the honeycomb substrate. With such a construction, the ring tray for honeycomb substrate firing avoids contact with the outer perimeter part of the lower end face of the outer covering of the honeycomb substrate. The outer covering of the outer perimeter part of the lower end face of the honeycomb substrate is a location particularly prone to damage such as cracking and chipping. This construction of the supporting part of the ring tray for honeycomb substrate firing of the invention therefore inhibits generation of damage during conveying and firing of the honeycomb substrate.

When a honeycomb substrate has been mounted on the ring tray for honeycomb substrate firing, the distance between the outer perimeter edge of the lower end face of the honeycomb substrate and the location of the lower end face of the honeycomb substrate that contacts with the supporting part may be set as appropriate according to the thickness of the outer covering of the honeycomb substrate, so that the supporting part does not contact the outer covering. This distance may be 0.2 mm or larger, 0.3 mm or larger, 0.5 mm or larger, 1.0 mm or larger, 1.5 mm or larger, 2.0 mm or larger or 2.5 mm or larger, for example, and 5.5 mm or smaller, 5.0 mm or smaller, 4.5 mm or smaller, 4.0 mm or smaller, 3.5 mm or smaller, 3.0 mm or smaller or 2.5 mm or smaller, for example.

The supporting part of the ring tray for honeycomb substrate firing of the invention may be constructed with multiple claw-like parts extending inward in the radial direction, or it may be ring-shaped. From the viewpoint of minimizing local stress on the lower end face of the honeycomb substrate, the supporting part is preferably ring-shaped. Here, "ring-shaped" includes both the concept of toric and elliptical annular. The supporting part may have a shape corresponding to the frame.

The uppermost section of the supporting part may be disposed below the uppermost section of the frame. Such a construction can be obtained, for example, by extending the connecting part described below in the direction downward from the frame and inward in the radial direction, extending the supporting part upward from the end edge of the connecting part and inward in the radial direction, and keeping the uppermost section of the supporting part at a height that does not reach the uppermost section of the frame.

### <Connecting part>

The ring tray for honeycomb substrate firing of the invention includes a connecting part that connects the frame with the supporting part.

The connecting part may be located below the surface defined by the contact part between the supporting part and the lower end face of the honeycomb substrate. With such a construction, contact between the connecting part and the outer perimeter edge of the lower end face of the honeycomb substrate will be avoided and damage to the honeycomb substrate will be reduced, even assuming vibration while being conveyed or swelling of the honeycomb substrate during firing.

In order to provide such a construction, the connecting part may extend in the direction downward from the frame and inward in the radial direction, for example.

The connecting part may also have holes running through the thickness direction of the ring tray for honeycomb substrate firing. If the connecting part has holes, it will also be able to transmit heat to the cell flow channels near the outer perimeter edge of the honeycomb substrate during firing of the honeycomb substrate.

The connecting part may be composed of connecting bridge parts that provide radial connection between the frame and the supporting part, and non-connecting parts (holes) where connection between the frame and the supporting part is lacking, as seen from above the ring tray for honeycomb substrate firing. In this case, the connecting bridge parts and the non-connecting parts may be arranged evenly in the radial direction, as seen from above the ring tray.

When the ring tray for honeycomb substrate firing is observed from above, the area ratio of holes occupying the area of the connecting parts including the holes may be 10% or higher, 20% or higher, 30% or higher, 40% or higher, 50% or higher or 60% or higher, and 90% or lower, 80% or lower, 70% or lower, 60% or lower or 50% or lower, for example.

The connecting part of the ring tray for honeycomb substrate firing of the invention may also have in its cross-section, when the ring tray is cut in the thickness direction, a relief part depressed toward the outer side of the ring tray in the radial direction. The relief part will now be explained again.

### <Relief part>

In the ring tray for honeycomb substrate firing of the invention, the construction is such that the frame and connecting part do not contact the lower end face of the honeycomb substrate when the honeycomb substrate has been mounted on the ring tray.

In order to ensure that such contact is avoided, at least the connecting part of the ring tray for honeycomb substrate firing of the invention may also have in its cross-section, when cut in the thickness direction, a relief part depressed toward the outer side of the ring tray in the radial direction. Both the connecting part and the frame may also have such a relief part. When both the connecting part and the frame have relief parts, the relief part of the connecting part and the relief part of the frame may be integral, forming a single relief part.

The location of the relief part may be a location such that the height of the lower end face of the honeycomb substrate is near the center of the recess part of the relief part when the honeycomb substrate is mounted on the ring tray for honeycomb substrate firing.

If the ring tray for honeycomb substrate firing has such a relief part, it will be possible to ensure a sufficient margin between the outer perimeter edge of the lower end face of the substrate and the frame and connecting part of the ring tray, when the honeycomb substrate has been mounted on the ring tray of the invention. This will make it possible to avoid contact between the outer perimeter edge of the lower end face of the substrate and the frame and connecting part of the ring tray, even assuming vibration during conveying and swelling of the ring tray during firing, thus reducing damage to the honeycomb substrate.

The relief part may also be formed so as to have smooth curves in a cross-section of the ring tray for honeycomb substrate firing cut in the thickness direction.

The extent of outward recess of the relief part in the radial direction may be 0.2 mm or greater, 0.3 mm or greater, 0.5 mm or greater, 1.0 mm or greater, 1.5 mm or greater or 2.0 mm or greater, for example, and 5.0 mm or lower, 4.0 mm or lower, 3.5 mm or lower or 3.0 mm or lower, for example, at the location of maximum recess.

### <Material of ring tray for honeycomb substrate firing>

The ring tray for honeycomb substrate firing of the invention may be made of any material so long as it has heat resistance to withstand firing of the honeycomb substrate and workability to allow formation of the desired construction.

The material of the ring tray for honeycomb substrate firing may be metal, ceramic or a heat-resistant resin, for example, with a metal such as stainless steel being particularly preferred.

### <Method for producing ring tray for honeycomb substrate firing>

The ring tray for honeycomb substrate firing of the invention can be produced by any similar method so long as it has the construction described above. However, the ring tray for honeycomb substrate firing of the invention can also be produced by cutting, for example, which does not involve welding. A ring tray for honeycomb substrate firing produced by a method without welding can be obtained with precise dimensions according to design, making it possible to effectively reduce damage to the outer covering of the honeycomb substrate caused by minute distortion.

### <Plate with attached ring tray for honeycomb substrate firing>

A different aspect of the invention provides a plate with an attached ring tray for honeycomb substrate firing.

The plate with an attached ring tray for honeycomb substrate firing of the invention is a plate with attached ring tray for honeycomb substrate firing:
comprising a support plate with an opening and one or more ring plates fitted into the opening,
wherein the ring tray is a ring tray for honeycomb substrate firing of the invention.

The shape and size of the opening of the support plate may be appropriately set according to the shape and size of the frame of the ring tray for honeycomb substrate firing that is expected to be fitted into the support plate.

Specifically, if the frame of the ring tray is toric, the opening of the support plate may have a circular form, with a diameter that is smaller than the diameter of the large diameter part of the outer peripheral section of the frame of the ring tray, and larger than the diameter of the small diameter part. If the frame of the ring tray is elliptical annular, the opening of the support plate may have an elliptical form, with a long diameter and short diameter that are smaller than the long diameter and short diameter of the large diameter part of the outer peripheral section of the frame of the ring tray, and larger than the diameter of the long diameter and short diameter of the small diameter part, respectively.

The support plate may be made of any material so long as it has heat resistance to withstand firing of the honeycomb substrate and workability to allow formation of the desired construction. The material of the support plate may be the same material or a different material from that of the ring tray for honeycomb substrate firing.

The material of the support plate may be metal, ceramic or a heat-resistant resin, for example, with a metal such as stainless steel being particularly preferred.

### <Method for producing exhaust gas purification catalyst device>

Yet another aspect of the invention provides a method for producing an exhaust gas purification catalyst device.

The method for producing an exhaust gas purification catalyst device of the invention is a method comprising firing a honeycomb substrate while the lower end of the honeycomb substrate is mounted on the supporting part of a ring tray for honeycomb substrate firing of the invention.

The ring tray on which the honeycomb substrate is mounted may be fitted into the opening of a support plate, or in other words, it may be the ring tray of a plate with an attached ring tray for honeycomb substrate firing of the invention.

The honeycomb substrate may be mounted on the supporting part of the ring tray after having been coated with a predetermined coating solution, and fired. Coating and firing of the coating solution on the honeycomb substrate may be carried out by publicly known methods.

### <Embodiment 1>

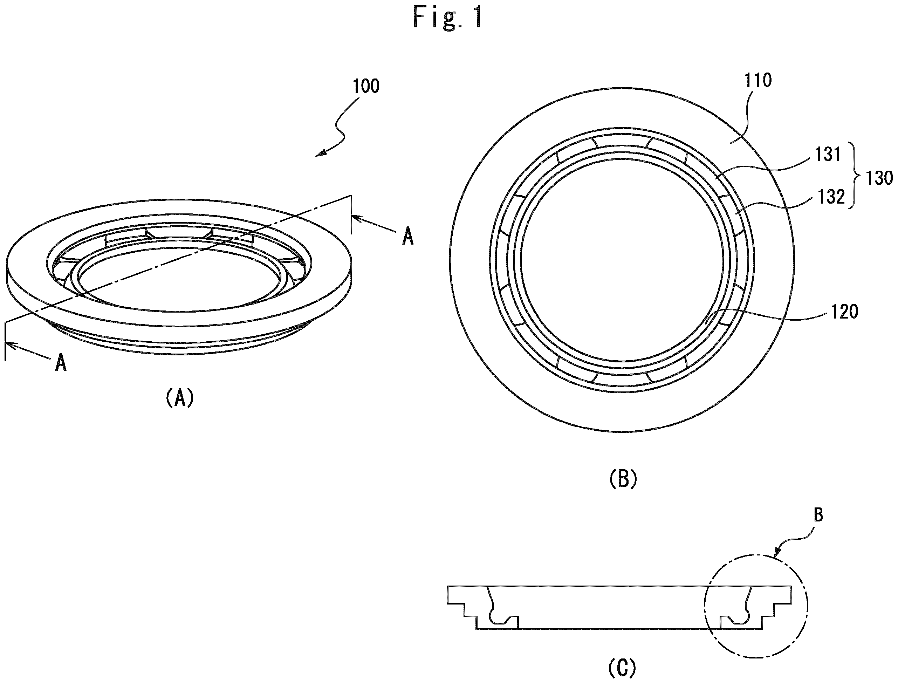

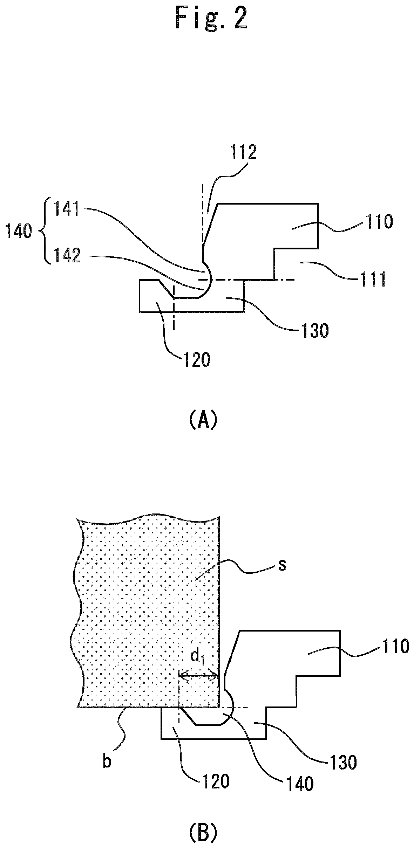

Fig. 1 and Fig. 2 show the construction of a ring tray for honeycomb substrate firing according to embodiment 1. Fig. 1(A) is a perspective view, Fig. 1(B) is a top view and Fig. 1(C) is a cross-sectional view of Fig. 1(A) along line A-A. Fig. 2(A) is a magnified view of section B of Fig. 1(C), and Fig. 2(B) shows the state of a honeycomb substrate mounted on the ring tray of Fig. 2(A).

The ring tray for honeycomb substrate firing (100) shown in Fig. 1 and Fig. 2 has a ring-shaped (toric) frame (110), a toric supporting part (120) disposed on the inner side in the radial direction, and a connecting part (130) that connects the frame (110) and the supporting part (120). The connecting part (130) is composed of 8 connecting bridge parts (131) that connect together the frame (110) and the supporting part (120) in a radial fashion, and 8 non-connecting parts (132) (holes) with nothing between the frame and the supporting part. As shown in Fig. 1(B), the 8 connecting bridge parts (131) and the 8 non-connecting parts (132) are arranged evenly in a radial fashion.

Fig. 2(A) is a cross-sectional view of Fig. 1(A) along line A-A, and corresponds to a cross-section of the ring tray for honeycomb substrate firing (100) cut in the thickness direction. The uppermost section of the frame (110) is flat, and therefore the general shape of the frame (110) is flat cylindrical. However the frame (110) has a stepwise level (111) at the outer peripheral section, so that it is composed of a large diameter part on the upper side and a small diameter part on the lower side.

The inner periphery of the frame (110) has a small diameter part near the center in the thickness direction of the frame (110), and an accommodating section (112) that gradually increases in diameter upward from the top end of the small diameter part.

Referring to Fig. 2(A), the connecting part (130) extends downward from the lower end of the frame (110) and inward in the radial direction. In Fig. 2(A), the boundary between the frame (110) and the connecting part (130) is indicated by a dash-dot line.

The supporting part (120) extends upward from the end of the connecting part (130) (the innermost side in the radial direction) and inward in the radial direction. In Fig. 2(A), the boundary between the connecting part (130) and the supporting part (120) is indicated by a dash-dot line.

The height at the uppermost section of the supporting part (120) does not reach the height at the uppermost section of the frame (110).

The frame (110) also has, in its inner periphery, a frame relief part (141) recessed outward in the radial direction while the connecting part (130) has, in its inner periphery, a connecting part relief part (142) recessed outward in the radial direction, the frame relief part (141) and connecting part relief part (142) being integral so as to form a single relief part (140).

Fig. 2(B) shows the state of a honeycomb substrate (s) mounted in the ring tray for honeycomb substrate firing of Fig. 2(A).

As shown in Fig. 2(B), the supporting part (120) supports the honeycomb substrate (s) by contacting the inner region of the lower end face (b) without contacting the outer perimeter of the lower end face (b) of the honeycomb substrate (s). The distance between the outer perimeter edge of the lower end face (b) of the honeycomb substrate (s) and the location of the lower end face (b) of the honeycomb substrate (s) that contacts with the supporting part (120) (the offset (d₁)) is appropriately set depending on the thickness of the outer covering of the honeycomb substrate (s) and the tolerance of the substrate diameter.

The height of the lower end face (b) of the honeycomb substrate (s) is near the center of the recessed region of the relief part (140), making it possible to avoid contact between the outer perimeter edge of the lower end face of the substrate and the ring tray for honeycomb substrate firing even assuming vibration during conveying and swelling of the honeycomb substrate during firing.

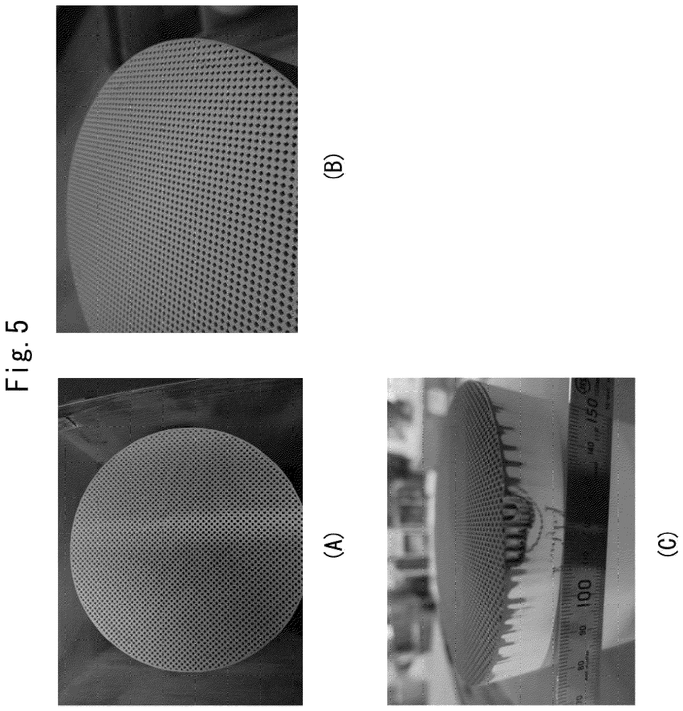

Fig. 5(A) and Fig. 5(B) show photographs of the lower end face of a conveyed and fired honeycomb substrate obtained using a ring tray for honeycomb substrate firing according to embodiment 1. Fig. 5(A) shows the entire lower end face, and Fig. 5(B) shows a close-up photograph. For reference, Fig. 5(C) shows a photograph of the area near the lower end face of a conveyed and fired honeycomb substrate obtained using a tray for honeycomb substrate firing according to the prior art.

When the tray for honeycomb substrate firing of the prior art was used, significant chipping occurred near the outer perimeter edge of the lower end face of the honeycomb substrate (Fig. 5(C)). In contrast, using the ring tray for honeycomb substrate firing according to embodiment 1 yielded a fired product with no damage such as cracking or chipping in the honeycomb substrate.

### <Embodiment 2>

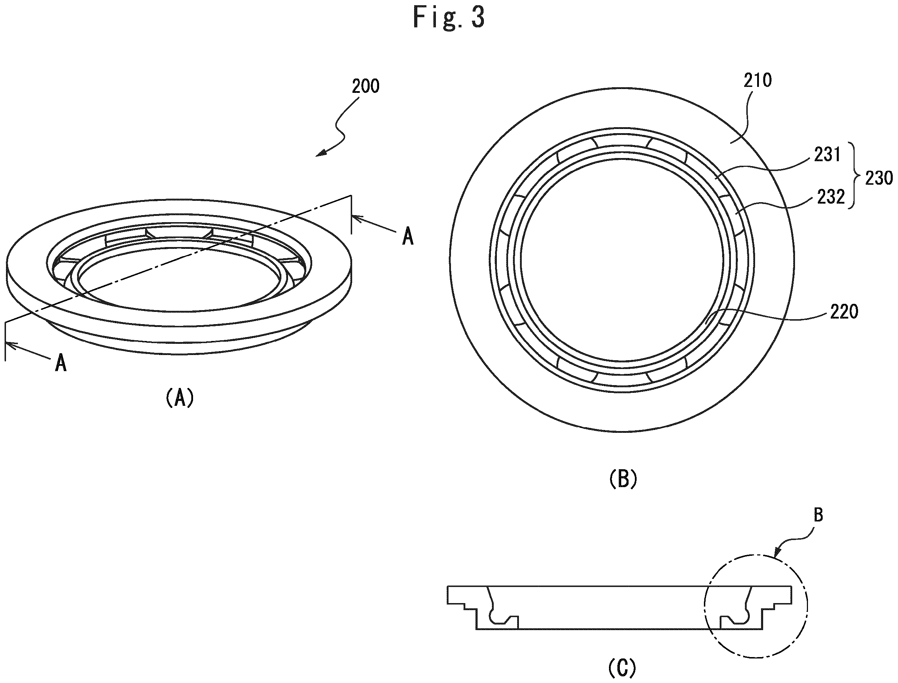

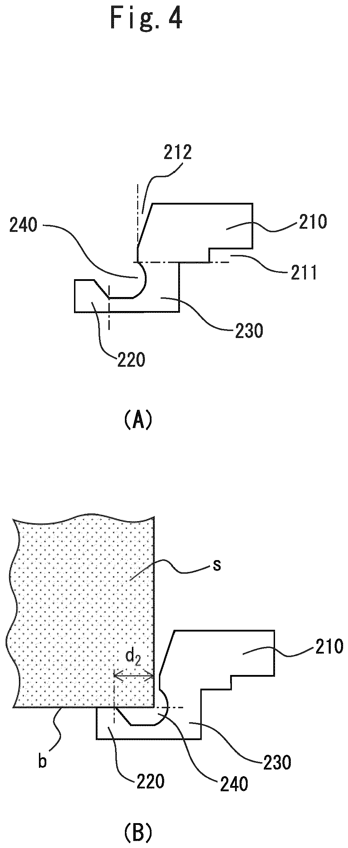

Fig. 3 and Fig. 4 show a separate example of the construction of a ring tray for honeycomb substrate firing according to embodiment 2. Fig. 3(A) is a perspective view, Fig. 3(B) is a top view and Fig. 3(C) is a cross-sectional view of Fig. 3(A) along line A-A. Fig. 4(A) is a magnified view of section B of Fig. 3(C), and Fig. 4(B) shows the state of a honeycomb substrate mounted on the ring tray of Fig. 4(A).

The ring tray for honeycomb substrate firing (200) shown in Fig. 3 and Fig. 4 is the same as the ring tray for honeycomb substrate firing (100) shown in Fig. 1 and Fig. 2 in that:
it has a ring-shaped (toric) frame (210), a toric supporting part (220) and a connecting part (230);
the connecting part (230) is composed of 8 connecting bridge parts (231) and non-connecting parts (232) (holes);
the frame (210) has a stepwise level (211) at the outer peripheral section, being composed of an upper large diameter part and a lower small diameter part;
the frame (210) has an accommodating section (212) at the inner periphery;
the supporting part (220) supports the honeycomb substrate (s) by contacting the inner region of the lower end face (b) of the honeycomb substrate (s); and
a predetermined offset (d₂) is formed between the outer perimeter edge of the lower end face (b) of the honeycomb substrate (s) and the location of the lower end face (b) of the honeycomb substrate (s) that contacts with the supporting part (120).

As shown in Fig. 4(A), however, the ring tray for honeycomb substrate firing (200) differs from the ring tray for honeycomb substrate firing (100) of Fig. 1 and Fig. 2 in that it has the relief part (240) only at the connecting part (230), while the frame (210) has no relief part. In this case as well, as illustrated in Fig. 4(B), the height of the lower end face (b) of the honeycomb substrate (s) is near the center of the recessed region of the relief part (240), making it possible to avoid contact between the outer perimeter edge of the lower end face of the substrate and the ring tray, even assuming vibration during conveying and swelling of the honeycomb substrate during firing.

### REFERENCE SIGNS LIST

100, 200 Ring tray for honeycomb substrate firing
110, 210 Frame
111, 211 Stepwise level
112, 212 Accommodating section
120, 220 Supporting part
130, 230 Connecting part
131, 231 Connecting bridge part
132, 232 Non-connecting part
140, 240 Relief part
141 Frame relief part
142 Connecting part relief part
s Honeycomb substrate
b Lower end face of honeycomb substrate
d₁, d₂ Offset

## Claims

1. A ring tray for honeycomb substrate firing, serving to support a honeycomb substrate having a plurality of cell flow channels partitioned by cell walls, so that the direction of the cell flow channels is vertical during firing of the substrate,
wherein the ring tray includes a ring-shaped frame, a supporting part further inward than the frame, and a connecting part that connects the frame with the supporting part, and
the ring tray is configured so that when the honeycomb substrate is mounted on the ring tray,
the supporting part does not contact the outer perimeter of the lower end face of the honeycomb substrate, but contacts part of the inner region of the lower end face of the honeycomb substrate, allowing it to support the lower end of the honeycomb substrate, and
the frame and the connecting part do not contact the lower end face of the honeycomb substrate.

2. The ring tray according to claim 1, wherein the connecting part is located below the surface defined by the contact part between the supporting part and the lower end face of the honeycomb substrate.

3. The ring tray according to claim 1 or 2, wherein the connecting part has holes running through the thickness direction of the ring tray.

4. The ring tray according to any one of claims 1 to 3, wherein in a cross section of the ring tray cut in the thickness direction, at least the connecting part has a relief part depressed toward the outer side of the ring tray in the radial direction.

5. The ring tray according to any one of claims 1 to 4, wherein the supporting part is ring-shaped.

6. A plate with an attached ring tray for honeycomb substrate firing,
comprising a support plate with an opening and one or more ring plates fitted into the opening,
the ring tray being a ring tray according to any one of claims 1 to 5.

7. A method for producing an exhaust gas purification catalyst device, the method comprising firing a honeycomb substrate while the lower end of the honeycomb substrate is mounted on the supporting part of a ring tray according to any one of claims 1 to 5.

8. A method for producing an exhaust gas purification catalyst device according to claim 7, wherein the ring tray is a plate with an attached ring tray according to claim 6.
